# FASCICULE DE BREVET EUROPEEN

(11) **EP 2 064 111 B1**
(45) Date de publication et mention de la délivrance du brevet: **25.08.2010**
(21) Numéro de dépôt: 06827944.7
(22) Date de dépôt: 21.09.2006
(51) Int. Cl.: B63B 35/36, E01D 15/20, E01D 15/22, B60F 3/00

(54) **DISPOSITIF DE MODIFICATION DE LA CARENE D'UN CORPS FLOTTANT ET VEHICULE AMPHIBIE COMPORTANT UN TEL DISPOSITIF**
VORRICHTUNG ZUR MODIFIZIERUNG DER HÜLLE EINES SCHWIMMKÖRPERS UND AMPHIBIENFAHRZEUG MIT EINER SOLCHEN VORRICHTUNG
DEVICE FOR MODIFYING THE HULL OF A FLOATING BODY AND AMPHIBIOUS VEHICLE COMPRISING SUCH A DEVICE

(43) Date de publication de la demande: 03.06.2009
(73) Titulaire: CONSTRUCTIONS INDUSTRIELLES DE LA MEDITERRANEE- CNIM, F-75008 Paris (FR)
(72) Inventeur: AUBERT, Henri, F-83110 Sanary (FR); RICHEUX, Elisabeth, F-13600 La Ciotat (FR)
(74) Mandataire: Thinat, Michel
(86) Numéro de dépôt international: PCT/FR2006/002163
(87) Numéro de publication internationale: WO 2008/034955

(56) Documents cités:
- EP-A1- 0 290 405
- FR-A1- 2 576 554
- GB-A- 2 393 691
- US-A- 4 730 574
- US-A1- 2005 145 157

## Description

La présente invention concerne un dispositif de modification de la carène d'un corps flottant formant partie d'un véhicule ou d'un pont flottant, ainsi qu'un véhicule amphibie comportant un tel dispositif. Le document US 4 730 574 A décrit un dispositif selon le préambule de la revendication 1.

Le dispositif de l'invention trouve son application principalement, mais pas exclusivement, dans le génie militaire et plus spécifiquement dans la conception de ponts flottants ou de bacs.

Des systèmes destinés à être utilisés, seuls ou en combinaison avec d'autres systèmes de même conception, comme ponts flottants ou comme bacs doivent pouvoir être utilisés de façon satisfaisante et autant que possible équivalente tant sur l'eau que sur terre ferme. Ils doivent également être en mesure de traverser des brèches humides et, notamment sans aide extérieure, la région limite entre l'eau et la terre ferme, telle que des berges ou rives. Enfin, des systèmes destinés à former des ponts flottants ou des bacs doivent être capables de supporter différents types de charges statiques ou dynamiques selon qu'ils servent comme pont flottant ou comme bac.

Lorsque de tels systèmes sont utilisés dans l'eau ou sur l'eau, c'est-à-dire comme bac ou comme pont flottant, il est souhaitable qu'ils aient des dimensions les plus grandes possibles en surface de circulation ou en plate-forme de portage ou e chargement, pour pouvoir passer la plus grande quantité de personnel ou de matériel dans un temps le plus court possible et dans une manière la plus économique possible. En même temps, lorsque ces mêmes systèmes doivent se déplacer sur la terre ferme, aussi bien les règles du code de la route ou de réglementations comparables que des aspects pratiques en dimensions et en poids posent des limites aux dimensions de tels systèmes.

Un type de solution à ce problème consiste, comme implicitement indiqué plus haut et déjà largement utilisé, à former des ponts flottants ou des bacs à partir d'une pluralité de systèmes de même conception. Cette solution permet de respecter facilement les contraintes de déplacement de ces systèmes sur la terre ferme et ouvre en même temps des possibilités quasiment illimitées de dimensions en tant que pont flottant ou bac.

Cependant, lorsque l'on utilise des systèmes composés à partir d'une pluralité de systèmes individuels, on rencontre souvent la situation que la combinaison de deux ou plusieurs systèmes entiers résultera en un pont flottant ou en un bac trop grand et qu'il serait donc souhaitable de disposer d'un système de taille partielle et de pouvoir le combiner avec un ou plusieurs systèmes de taille entière.

Une première possibilité de varier les dimensions des systèmes pour pont flottant ou bac consiste en un élargissement de la largeur d'un système flottant, par exemple pour dégager une voie dite piétonne, afin de pouvoir passer plus facilement autour du véhicule ou tout autre objet posé ou circulant sur le système flottant. Un tel élargissement est obtenu, par exemple, par aménagement de voies de circulation sur les flotteurs du système ou par ajout manuel de surfaces de circulation en cas de besoin. Pour subvenir à la sécurité du personnel destiné à évoluer sur un tel système élargi, des planches de rehaussement ou autre moyens déployés manuellement ont dû être expérimentés.

Le but de l'invention est de proposer une solution qui permette une certaine flexibilité dimensionnelle d'un système flottant.

Le but de l'invention est atteint avec un dispositif de modification de la carène d'un corps flottant formant partie d'un véhicule ou d'un pont flottant ayant un corps flottant de base avec une face supérieure formant une voie de roulement principale et deux faces latérales.

Selon l'invention, le dispositif comprend, de part et d'autre du corps flottant de base, une première paroi mobile montée pivotante sur une partie inférieure de la face latérale correspondante du corps flottant de base autour d'un premier axe, une deuxième paroi mobile montée pivotante sur la première paroi mobile autour d'un deuxième axe et une troisième paroi mobile montée pivotante sur la deuxième paroi mobile autour d'un troisième axe, les trois axes étant parallèles les uns aux autres et à un axe longitudinal de la voie de roulement principale et les trois parois mobiles étant disposées les unes par rapport aux autres de manière que, en position repliée, la première paroi mobile est disposée sensiblement parallèlement à la face latérale du corps flottant de base et les deuxième et troisième parois mobiles recouvrent partiellement la face supérieure du corps flottant de base et, en position déployée, la première paroi mobile délimite un volume entre elle et la face latérale, la deuxième paroi mobile prolonge la première paroi mobile et la troisième paroi mobile forme une voie additionnelle élargissant la face supérieure.

Grâce aux dispositions de l'invention, un corps flottant formant partie d'un véhicule amphibie ou d'un pont flottant ou d'un bac présente ainsi les avantages et capacités suivants :
- possibilité d'élargissement de la voie de circulation,
- amélioration du profil de carène,
- présence d'une rehausse,
- rajout d'un volume améliorant la flottabilité,
- position de stockage compacte et intégrée au corps flottant.

Les modifications du corps flottant apportées à une position de repli ou de stockage peuvent être effectuées de manière automatique.

Un corps flottant incorporant le dispositif de l'invention comprend ainsi un corps de pont ou corps flottant en une ou deux parties et, de part et d'autre de celui-ci, donc de manière symétrique, une carène inférieure mobile prolongée vers le haut par une rehausse mobile, un platelage mobile formant un élargissement de la voie de circulation du corps flottant, et un soufflet agrandissant le volume flottant. La carène inférieure est formée par la première paroi mobile qui est articulée moyennant une charnière inférieure sur le corps du pont, de préférence sur la partie inférieure de la carène du corps flottant. La rehausse est formée par une deuxième paroi mobile articulée sur le bord supérieur de la carène inférieure moyennant une charnière supérieure. Le platelage est formé par une troisième paroi mobile articulée sur la rehausse à un niveau supérieur à celui de la charnière supérieure afin que le platelage puisse s'étendre approximativement dans le même plan que celui de la voie de circulation du corps flottant lorsque le dispositif de l'invention est entièrement déployé.

Une description plus détaillée est faite plus loin en référence aux dessins.

Le mouvement entre la position repliée de la carène inférieure, de la rehausse et du platelage et une position déployée de ceux-ci est effectué à l'aide d'un vérin articulé respectivement sur le corps de pont et sur la rehausse. Le mouvement de déploiement, notamment de la rehausse par rapport à la carène inférieure, est limité par une butée solidaire de la rehausse.

Le déploiement des parois mobiles peut être effectué de différentes manières, essentiellement suivant les dimensions des parois. Ainsi, selon une première manière, lorsque le vérin est actionné, la carène inférieure est pivotée autour de la charnière inférieure jusqu'à arriver à une butée, puis le vérin provoque le pivotement de la rehausse autour de la charnière supérieure jusqu'à l'arrivée de la rehausse à une butée correspondante. Selon une seconde manière, l'actionnement du vérin provoque d'abord un pivotement de la carène inférieure et puis, lorsque la carène inférieure a effectué une première partie de pivotement, la rehausse commence à pivoter et la carène inférieure et la rehausse pivotent, chacune à sa façon, jusqu'à l'arrivée de chacune à une butée correspondante. Le pivotement de la carène inférieure et puis le pivotement de la rehausse entraînent le déplacement du platelage et l'ouverture du soufflet.

Lorsque les trois parois mobiles sont en position de déploiement, différents verrouillages permettent de maintenir le platelage et de bloquer la carène et la rehausse entre elles. Ces verrouillages s'effectuent de préférence par des crochets mobiles ou articulés, comme cela sera expliqué plus loin en référence aux dessins.

Sans sortir du principe de la présente invention, les moyens évoqués peuvent être remplacés, par exemple, de la manière suivante :
- le vérin peut être remplacé par un système tige filetée et écrou, par un dispositif de treuil et câble ou par un boudin gonflable, et
- les butées peuvent être remplacées par des systèmes de biellettes, des câbles ou des chaînes.

Il va sans dire que le système de pivotement automatique par actionnement de vérins peut être remplacé par un système entièrement manuel.

Par ailleurs, la fixation du platelage en position déployée peut être combinée avec un guide-roue.

Et le déploiement automatique peut être limité à la carène inférieure, le pivotement de la rehausse pouvant être effectué manuellement.

Selon les dimensions du corps flottant et des trois parois mobiles, il est également possible de définir deux ou trois zones, voir quatre zones, dans le sens axial du pont flottant et de remplacer chacune des trois parois mobiles par autant de parois partielles qu'il y a de zones définies.

D'autres caractéristiques et avantages de la présente invention ressortiront de la description ci-après d'un mode de réalisation du dispositif de l'invention. La description est faite en référence aux dessins dans lesquels :
- la figure 1 représente un corps flottant en perspective avec un dispositif de l'invention selon un mode de réalisation préféré de l'invention,
- la figure 2 représente le corps flottant de la figure 1 en position repliée,
- les figures 3 à 5 montrent de manière schématique les parois mobiles en position repliée, en une position intermédiaire et en position déployée,
- la figure 6 montre l'articulation des parois mobiles sur le corps flottant,
- la figure 7 montre un exemple de butée mécanique destiné à limiter le pivotement des parois mobiles,
- les figures 8 à 10 représentent des moyens de verrouillage et
- les figures 11 et 12 représentent schématiquement des moyens de remplacement pouvant être utilisés à la place des vérins et des butées.

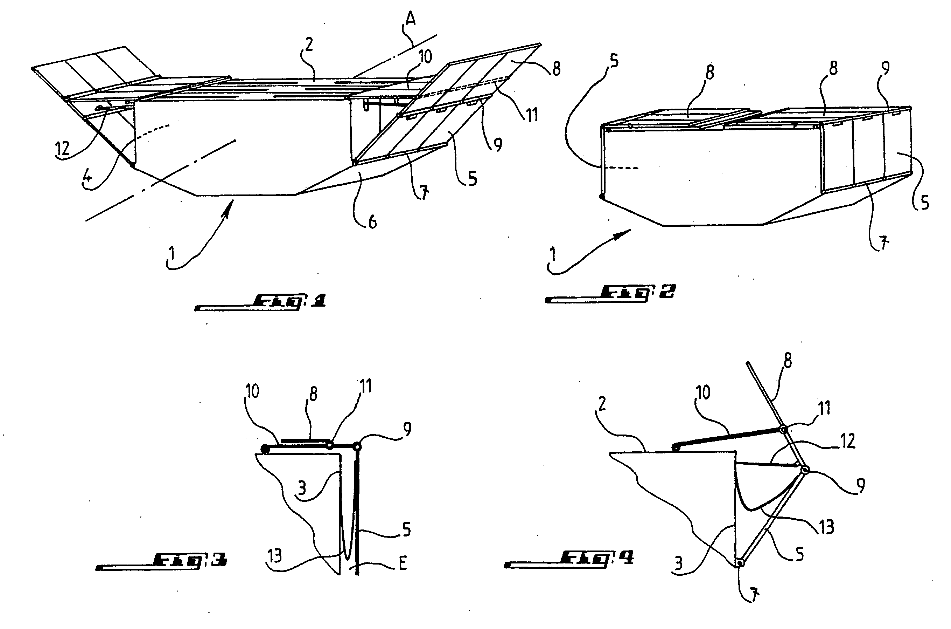

La figure 1 montre un corps flottant comportant un dispositif de modification de la carène selon l'invention. Le corps flottant est représenté en position déployée. Le corps flottant comprend un corps flottant de base 1 réalisé en une seule partie et comportant une face supérieure 2 formant une voie de roulement principale ou une surface de stockage, ainsi que deux faces latérales 3, 4 et des faces avant, arrière et inférieure permettant d'obtenir un corps étanche et flottant.

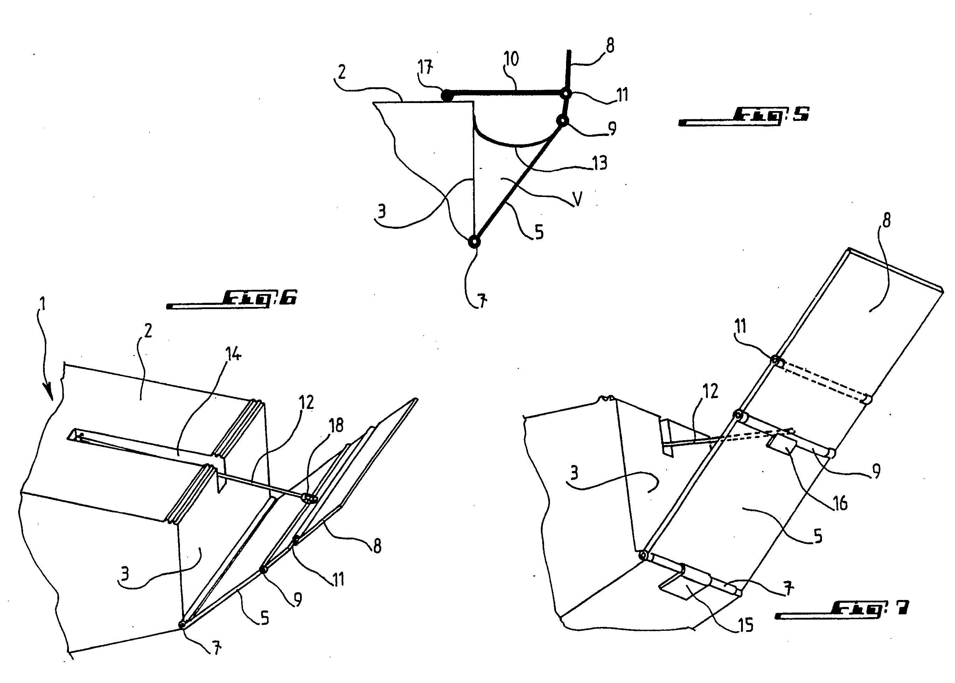

Le corps flottant comprend par ailleurs, de part et d'autre du corps flottant de base 1, une première paroi mobile 5 montée pivotante sur une partie inférieure 6 de la face latérale correspondante 3 du corps flottant de base 1 autour d'un premier axe 7, une deuxième paroi mobile 8 montée pivotante sur la première paroi mobile 5 autour d'un deuxième axe 9, ainsi qu'une troisième paroi mobile 10 montée pivotante sur la deuxième paroi mobile 8 autour d'un troisième axe 11. Les trois axes 7, 9 et 11 sont parallèles les uns aux autres et également parallèles à un axe longitudinal A de la voie de roulement principale 2. Les trois parois mobiles 5, 8 et 10 sont disposées les unes par rapport aux autres de manière que, en position repliée (voir figure 2) la première paroi mobile 5 est disposée sensiblement parallèlement à la face latérale 3 du corps flottant de base 1 et les deuxième et troisième parois mobiles 8 et 10 recouvrent partiellement la face supérieure 2 du corps flottant de base 1. En même temps les trois parois mobiles 5, 8 et 10 sont disposées les unes par rapport aux autres et de manière que, en position déployée, la première paroi mobile 5 délimite un volume V entre elle et la face latérale 3 (voir figure 5), la deuxième paroi mobile 8 prolonge la première paroi mobile 5 et la troisième paroi mobile 10 forme une voie additionnelle élargissant la face supérieure 2 du côté correspondant.

Sur les figures 1 et 2, les parois mobiles 5, 8 et 10 sont représentées comme étant composées de trois parties à largeur approximativement égale pour faciliter la manipulation des parois mobiles et, notamment, pour pouvoir répartir la charge de manière plus régulière sur le moyen d'entraînement, représenté ici, de part et d'autre, par trois vérins 12.

En ce qui concerne les dimensions des parois mobiles et plus particulièrement la hauteur de la première mobile 5, cette hauteur est déterminée de façon que, en position repliée, le deuxième axe 9 soit disposé à un niveau supérieur à celui dans lequel s'étend la surface supérieure 2 et que, grâce à cette disposition, la deuxième et la troisième parois mobiles 8 et 10 puissent reposer sensiblement à plat sur la face supérieure 2 du corps flottant de base 1.

Le troisième axe 11 est à espacer du deuxième axe 9 d'une distance telle que, en position déployée, la troisième paroi mobile 10 s'étende au moins approximativement dans le même plan que la face supérieure 2.

Comme le montrent les figures 3 à 5, un soufflet 13 est attaché entre la paroi latérale 3 du corps flottant de base 1 et la première paroi mobile 5. Lorsque le dispositif de l'invention est en position repliée, le soufflet 13 est plié et remplit à lui seul au moins une partie d'un faible espace E laissé subsister lorsque la première paroi mobile 5 est presque en appui contre la face latérale 3. Lorsque les parois mobiles se déplacent vers la position déployée, le soufflet 13 se déploie également et, lorsque le dispositif est entièrement déployé, le soufflet 13 est entièrement ouvert et délimite, ensemble avec la face latérale 3 et la première paroi mobile 5, un volume V de flottabilité supplémentaire. Comme le montre, par exemple, la figure 5, des galets 17 situés en extrémité de la troisième paroi mobile 10 facilitent la translation de cette dernière aussi bien lors d'un déploiement que lors d'un reploiement des parois mobiles.

Les figures 6 et 7 montrent l'entraînement des parois mobiles 5 et 8 moyennant le vérin 12, faisant abstraction de la paroi mobile 10. Le vérin 12, qui est représenté ici de manière très simplifiée par sa seule tige mobile, est logé dans le corps flottant de base 1 dans un évidement 14 et est articulé d'une part sur la face supérieure 2 et d'autre part sur la deuxième paroi mobile 8 entre le deuxième axe 9 et le troisième axe 11. Cette disposition permet, lorsque les parois mobiles sont en position repliée, que le vérin 12 lorsqu'il est activé, pousse la deuxième paroi mobile 8 par translation vers l'extérieur. Ce mouvement entame un pivotement de la première paroi mobile 5 jusqu'à un certain point à partir duquel la deuxième paroi mobile commence à pivoter autour du deuxième axe 9. A partir de ce moment, la troisième paroi mobile 10 n'évolue plus en translation, mais évolue en un mouvement mixte de translation et de pivotement autour du troisième axe 11 en suivant le mouvement de celui-ci qui décrit dans un premier temps un mouvement d'ascension et puis, vers la fin du mouvement, une descente pour regagner le niveau initial afin que la troisième paroi mobile 10 puisse venir à l'arrêt dans un plan sensiblement parallèle à celui de la face supérieure 2. La figure 5 représente cette étape finale et la position déployée pour l'ensemble des trois parois mobiles 5, 8 et 10.

La figure 7 montre par ailleurs que le pivotement de la première paroi mobile 5 et le pivotement de la deuxième paroi mobile 8 sont limités chacun par des butées référencées respectivement 15 et 16 pour la première paroi 5 et pour la deuxième paroi 8. Dans les deux cas, il s'agit de butées mécaniques de type recouvrement.

Selon une variante non représentée dans les dessins, il est également concevable que le vérin 12 soit monté non pas sur la deuxième paroi mobile 8, mais sur la première paroi mobile 5 juste en dessous du deuxième axe 9. Une telle disposition du vérin 12 est avantageuse lorsque l'on veut bénéficier de la capacité d'élargissement de la voie d'un pont flottant sans pour autant dresser à chaque fois la deuxième paroi mobile pour obtenir une rehausse.

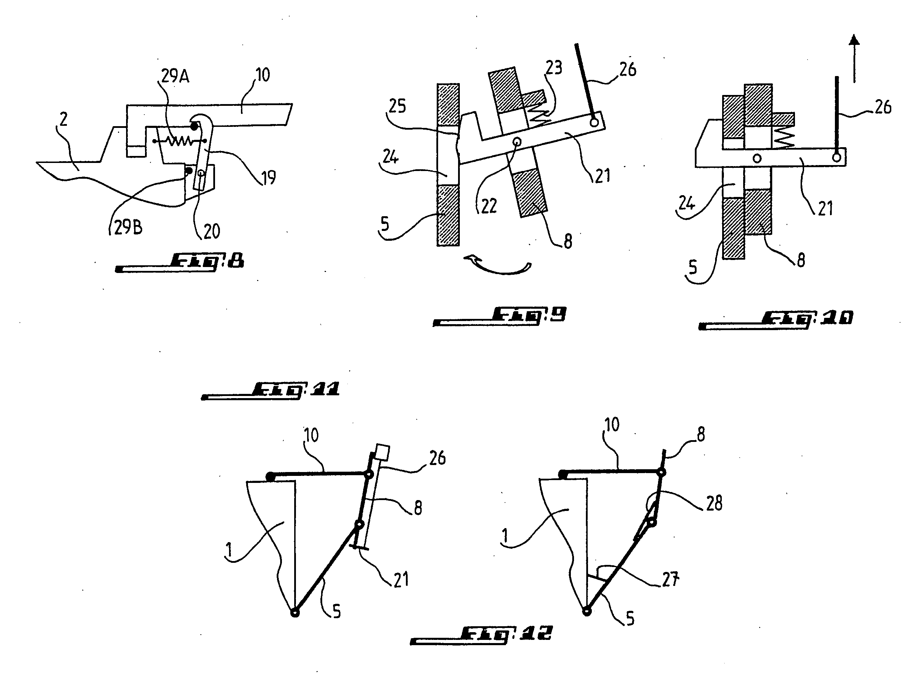

Les figures 8 à 10 montrent des mécanismes de verrouillage automatiques utilisés pour verrouiller les parois mobiles en position déployée.

La figure 8 montre l'attachement de la troisième paroi mobile 10 sur la face supérieure 2 du corps flottant de base 1 moyennant un crochet 19. Le crochet 19 est avantageusement précontraint par un axe de torsion 20 et/ou par un ressort 29A. Bien que, généralement, soit l'un soit l'autre de ces deux moyens de précontrainte sera prévu, il n'est cependant techniquement pas impossible de prévoir les deux simultanément, ne serait-ce qu'à titre de redondance pour une meilleure sécurité de l'attachement. Lorsqu'un ressort 29A est prévu, il est avantageusement, mais non nécessairement, assorti d'une butée 29B.

Les figures 9 et 10 montrent un mécanisme de verrouillage destiné à verrouiller la deuxième paroi mobile 8, en position déployée, sur la première paroi 5. Ce mécanisme comprend essentiellement un crochet 21 monté pivotant sur la deuxième paroi mobile 8 moyennant un axe 22 et précontraint moyennant un ressort 23. Lorsque la deuxième paroi 8 s'approche de la première paroi mobile 5, la tête libre du crochet 21 se trouve en face d'un orifice 24 pratiqué dans la première paroi mobile 5 et est dévié par le bord de l'orifice 24 agissant sur une face biseautée 25 de la tête de crochet 21. Le crochet 21 est dévié et pénètre, puis traverse, l'orifice 24 lorsque le crochet a traversé entièrement l'orifice 24, et regagne sa position initiale et verrouille ainsi la deuxième paroi mobile 8 sur la première paroi mobile 5. Pour déverrouiller ces deux parois, le crochet 21 peut être basculé moyennant un câble 26 agissant contre l'effort du ressort 23 pour débloquer le crochet 21 et séparer ainsi la première paroi mobile 5 de la deuxième paroi mobile 8.

La figure 11 représente la première paroi mobile 5 et la deuxième paroi mobile 8 en cours de déploiement, proche du déploiement final, avec les moyens de verrouillage des figures 9 et 10 représentés de manière simplifiée. Le crochet 21 s'approche du point d'enclenchement.

La figure 12 montre l'utilisation de biellettes 27, 28 à la place de butées pour limiter le pivotement des parois mobiles 5 et 8.

## Revendications

1. Dispositif de modification de la carène d'un corps flottant formant partie d'un véhicule ou d'un pont flottant ayant un corps flottant de base (1) avec une face supérieure (2) formant une voie de roulement principale et deux faces latérales (3, 4),
**caractérisé en ce qu'**il comprend, de part et d'autre du corps flottant de base (1), une première paroi mobile (5) montée pivotante sur une partie inférieure (6) de la face latérale correspondante (3) du corps flottant de base (1) autour d'un premier axe (7), une deuxième paroi mobile (8) montée pivotante sur la première paroi mobile (5) autour d'un deuxième axe (9) et une troisième paroi mobile (10) montée pivotante sur la deuxième paroi mobile (8) autour d'un troisième axe (11), les trois axes (3, 7, 11) étant parallèles les uns aux autres et à un axe longitudinal (A) de la voie de roulement principale (2) et les trois parois mobiles (5, 8, 10) étant disposées les unes par rapport aux autres de manière que, en position repliée, la première paroi mobile (5) est disposée sensiblement parallèlement à la face latérale (3) du corps flottant de base (1) et les deuxième et troisième parois mobiles (8, 10) recouvrent partiellement la face supérieure (2) du corps flottant de base (1) et, en position déployée, la première paroi mobile (5) délimite un volume (V) entre elle et la face latérale (3), la deuxième paroi mobile (8) prolonge la première paroi mobile (5) et la troisième paroi mobile (10) forme une voie additionnelle élargissant la face supérieure (2).

2. Dispositif selon la revendication 1, **caractérisé en ce que** la hauteur de la première paroi mobile (5) est déterminée de façon que, en position repliée, le deuxième axe (9) soit disposé à un niveau supérieur à celui dans lequel s'étend la face supérieure (2) afin que la deuxième et la troisième parois mobiles (8, 10) puissent reposer sur la face supérieure (2).

3. Dispositif selon la revendication 1 ou 2, **caractérisé en ce que** le troisième axe (11) est espacé du deuxième axe (9) d'une distance telle que, en position déployée, la troisième paroi mobile (10) s'étende au moins approximativement dans le même plan que la face supérieure (2).

4. Dispositif selon l'une quelconque des revendications 1 à 3, **caractérisé en ce qu'**il comprend, de part et d'autre du corps flottant de base (1), un vérin (12) pour le déploiement et le reploiement de la première paroi mobile (5).

5. Dispositif selon l'une quelconque des revendications 1 à 3, **caractérisé en ce qu'**il comprend, de part et d'autre du corps flottant de base (1), un vérin (12) pour le déploiement et le reploiement de l'ensemble des trois parois mobiles (5, 8, 10).

6. Dispositif selon l'une quelconque des revendications 1 à 5, **caractérisé en ce que** la deuxième paroi mobile (8) est conformée pour constituer un rehaussement de la carène.

7. Dispositif selon l'une quelconque des revendications 1 à 6, **caractérisé en ce que** la deuxième paroi mobile (8) comprend une butée (16) de type recouvrement limitant le pivotement de la deuxième paroi mobile (8) par rapport à la première paroi mobile (5) lors du déploiement.

8. Dispositif selon l'une quelconque des revendications 4 à 7, **caractérisé en ce que** le vérin (12) est articulé sur le corps flottant de base (1) et la deuxième paroi mobile (8) par des chapes (18).

9. Dispositif selon l'une quelconque des revendications 1 à 8, **caractérisé en ce que** la première et la deuxième parois mobiles (5, 8) comportent un mécanisme de verrouillage automatique (21) permettant de verrouiller les deux parois (5,8) l'une sur l'autre en position déployée.

10. Dispositif selon l'une quelconque des revendications 1 à 9, **caractérisé en ce qu'**il comporte un mécanisme de verrouillage (19) permettant de verrouiller la troisième paroi mobile (10) sur la surface supérieure (2) en position déployée.

11. Dispositif selon l'une quelconque des revendications 1 à 10, **caractérisé en ce qu'**il comporte un soufflet (13) conformé et fixé entre la première paroi mobile (5) et le corps flottant de base (1) de manière à rendre flottant le volume (V) enfermé entre la première paroi mobile (5) et la face latérale (3).

12. Véhicule amphibie, **caractérisé en ce qu'**il comprend un dispositif selon l'une quelconque des revendications 1 à 11.

13. Pont flottant, **caractérisé en ce qu'**il comprend un dispositif selon l'une quelconque des revendications 1 à 11.

## Claims

1. A device for modifying the hull of a floating body being part of a vehicle or a floating bridge having a basic floating body (1) with an upper face (2) forming a main runway, and two side faces (3, 4),
**characterized in that** it comprises, on either side of the basic floating body (1), a first mobile wall (5) pivotingly mounted on a lower part (6) of the corresponding side face (3) of the basic floating body (1) around a first axis (7), a second mobile wall (8) pivotingly mounted on the first mobile wall (5) around a second axis (9), and a third mobile wall (10) pivotingly mounted on the second mobile wall (8) around a third axis (11), the three axes (3, 7, 11) being parallel to each other and to a longitudinal axis (A) of the main runway (2), and the three mobile walls (5, 8, 10) being arranged with respect to each other so that in the folded position, the first mobile wall (5) is arranged substantially in parallel to the side face (3) of the basic floating body (1), and the second and third mobile walls (8, 10) partially cover the upper face (2) of the basic floating body (1), and in the unfolded position, the first mobile wall (5) defines a volume (V) between the same and the side face (3), the second mobile wall (8) extends the first mobile wall (5), and the third mobile wall (10) forms an additional way widening the upper face (2).

2. The device according to claim 1, **characterized in that** the height of the first mobile wall (5) is determined so that in the folded position, the second axis (9) is arranged at a level that is higher than that at which the upper face (2) is extending so that the second and the third mobile walls (8, 10) can rest on the upper face (2).

3. The device according to claim 1 or 2, **characterized in that** the third axis (11) is spaced from the second axis (9) by a distance such that in the unfolded position, the third mobile wall (10) extends at least approximately in the same plane as the upper face (2).

4. The device according to any of claims 1 to 3, **characterized in that** it comprises on either side of the basic floating body (1), a jack (12) for unfolding and folding the first mobile wall (5).

5. The device according to any of claims 1 to 3, **characterized in that** it comprises, on either side of the basic floating body (1), a jack (12) for unfolding and folding all of the three mobile walls (5, 8, 10).

6. The device according to any of claims 1 to 5, **characterized in that** the second mobile wall (8) is configured for forming a raised part of the hull.

7. The device according to any of claims 1 to 6, **characterized in that** the second mobile wall (8) comprises a stop (16) of the covering kind, limiting the pivoting motion of the second mobile wall (8) with respect to the first mobile wall (5) during unfolding.

8. The device according to any of claims 4 to 7, **characterized in that** the jack (12) is hinged on the basic floating body (1) and the second mobile wall (8) via clevises (18).

9. The device according to any of claims 1 to 8, **characterized in that** the first and second mobile walls (5, 8) comprise an automatic locking mechanism (21) enabling locking of both walls (5, 8) one above the other in the unfolded position.

10. The device according to any of claims 1 to 9, **characterized in that** it comprises a locking mechanism (19) enabling locking of the third mobile wall (10) on the upper surface (2) in the unfolded position.

11. The device according to any of claims 1 to 10, **characterized in that** it comprises a bellows (13) configured and fastened between the first mobile wall (5) and the basic floating body (1) so as to make the volume (V) enclosed between the first mobile wall (5) and the side face (3) floating.

12. An amphibious vehicle, **characterized in that** it comprises a device according to any of claims 1 to 11.

13. A floating bridge, **characterized in that** it comprises a device according to any of claims 1 to 11.

## Patentansprüche

1. Vorrichtung zum Ändern der Hülle eines Schwimmkörpers, der Teil eines Fahrzeugs oder einer Pontonbrücke ist, die einen Grundschwimmkörper (1) mit einer oberen Seite (2), die einen Hauptfahrweg bildet, und zwei Seitenflächen (3, 4) aufweist,
**dadurch gekennzeichnet, dass** sie auf beiden Seiten des Grundschwimmkörpers (1) eine erste bewegliche Wand (5), die auf einem unteren Teil (6) der entsprechenden Seitenfläche (3) des Grundschwimmkörpers (1) um eine erste Achse (7) schwenkbar angebracht ist, eine zweite bewegliche Wand (8), die an der ersten beweglichen Wand (5) um eine zweite Achse (9) schwenkbar angebracht ist, und eine dritte bewegliche Wand (10), die an der zweiten beweglichen Wand (8) um eine dritte Achse (11) schwenkbar angebracht ist, umfasst, wobei die drei Achsen (3, 7, 11) zueinander und zu einer Längsachse (A) des Hauptfahrwegs (2) parallel sind, und die drei beweglichen Wände (5, 8, 10) zueinander derart angeordnet sind, dass in der eingeklappten Position die erste bewegliche Wand (5) im Wesentlichen parallel zu der Seitenfläche (3) des Grundschwimmkörpers (1) angeordnet ist, und die zweiten und dritten beweglichen Wände (8, 10) die obere Seite (2) des Grundschwimmkörpers (1) teilweise bedecken, und in der ausgeklappten Position die erste bewegliche Wand (5) einen Raum (V) zwischen sich und der Seitenfläche (3) begrenzt, wobei die zweite bewegliche Wand (8) die erste bewegliche Wand (5) verlängert und die dritte bewegliche Wand (10) eine zusätzliche Bahn bildet, welche die obere Seite (2) verbreitert.

2. Vorrichtung nach Anspruch 1, **dadurch gekennzeichnet, dass** die Höhe der ersten beweglichen Wand (5) derart bestimmt ist, dass in der eingeklappten Position die zweite Achse (9) auf einer Höhe angeordnet ist, die höher ist als diejenige, auf der sich die obere Seite (2) derart erstreckt, dass die zweiten und dritten beweglichen Wände (8, 10) auf der oberen Seite (2) liegen können.

3. Vorrichtung nach Anspruch 1 oder 2, **dadurch gekennzeichnet, dass** die dritte Achse (11) von der zweiten Achse (9) um einen Abstand derart beabstandet ist, dass in der eingeklappten Position sich die dritte bewegliche Wand (10) mindestens ungefähr in der gleichen Ebene erstreckt wie die obere Seite (2).

4. Vorrichtung nach einem der Ansprüche 1 bis 3, **dadurch gekennzeichnet, dass** sie auf beiden Seiten des Grundschwimmkörpers (1) einen Zylinder (12) zum Ausklappen und Einklappen der ersten beweglichen Wand (5) umfasst.

5. Vorrichtung nach einem der Ansprüche 1 bis 3, **dadurch gekennzeichnet, dass** sie auf beiden Seiten des Grundschwimmkörpers (1) einen Zylinder (12) zum Ausklappen und Einklappen aller drei beweglichen Wände (5, 8, 10) umfasst.

6. Vorrichtung nach einem der Ansprüche 1 bis 5, **dadurch gekennzeichnet, dass** die zweite bewegliche Wand (8) konfiguriert ist, um einen Aufsatz der Hülle zu bilden.

7. Vorrichtung nach einem der Ansprüche 1 bis 6, **dadurch gekennzeichnet, dass** die zweite bewegliche Wand (8) einen Anschlag (16) der abdeckenden Art umfasst, der die Schwenkbewegung der zweiten beweglichen Wand (8) im Verhältnis zur ersten beweglichen Wand (5) während des Ausklappens begrenzt.

8. Vorrichtung nach einem der Ansprüche 4 bis 7, **dadurch gekennzeichnet, dass** der Zylinder (12) an dem Grundschwimmkörper (1) und der zweiten beweglichen Wand (8) über Bügel (18) angelenkt ist.

9. Vorrichtung nach einem der Ansprüche 1 bis 8, **dadurch gekennzeichnet, dass** die ersten und zweiten beweglichen Wände (5, 8) einen automatischen Verriegelungsmechanismus (21) umfassen, der das Verriegeln der beiden Wände (5, 8) übereinander in der ausgeklappten Position ermöglicht.

10. Vorrichtung nach einem der Ansprüche 1 bis 9, **dadurch gekennzeichnet, dass** sie einen Verriegelungsmechanismus (19) umfasst, der das Verriegeln der dritten beweglichen Wand (10) auf der oberen Fläche (2) in der ausgeklappten Position ermöglicht.

11. Vorrichtung nach einem der Ansprüche 1 bis 10, **dadurch gekennzeichnet, dass** sie einen Faltenbalg (13) umfasst, der zwischen der ersten beweglichen Wand (5) und dem Grundschwimmkörper (1) konfiguriert und befestigt ist, um den Raum (V), der zwischen der ersten beweglichen Wand (5) und der Seitenfläche (3) eingeschlossen ist, schwimmend zu machen.

12. Amphibienfahrzeug, **dadurch gekennzeichnet, dass** es eine Vorrichtung nach einem der Ansprüche 1 bis 11 umfasst.

13. Pontonbrücke, **dadurch gekennzeichnet, dass** sie eine Vorrichtung nach einem der Ansprüche 1 bis 11 umfasst.
